Europäisches Patentamt

European Patent Office

Office européen des brevets

(11) Veröffentlichungsnummer: **0 340 490 B1**

# (12) EUROPÄISCHE PATENTSCHRIFT

(45) Veröffentlichungstag der Patentschrift: **02.12.92**

(21) Anmeldenummer: **89106456.0**

(22) Anmeldetag: **12.04.89**

(51) Int. Cl.⁵: **B23Q 11/08**, F16P 1/00

(54) Faltenbalg.

(30) Priorität: **05.05.88 DE 3815401**

(43) Veröffentlichungstag der Anmeldung:
**08.11.89 Patentblatt 89/45**

(45) Bekanntmachung des Hinweises auf die
Patenterteilung:
**02.12.92 Patentblatt 92/49**

(84) Benannte Vertragsstaaten:
**DE ES FR GB IT**

(56) Entgegenhaltungen:
**DE-A- 3 240 988**
**DE-C- 812 044**

(73) Patentinhaber: **Gebr. Hennig GmbH**
**Dorfstrasse 41**
**W-8045 Ismaning(DE)**

(72) Erfinder: **Hennig, Kurt**
**Georgensteinstrasse 16**
**W-8000 München 71(DE)**

(74) Vertreter: **Tetzner, Volkmar, Dr.-Ing. Dr. jur.**
**Van-Gogh-Strasse 3**
**W-8000 München 71(DE)**

**Beschreibung**

Die Erfindung betrifft einen Faltenbalg zum Schutz von Teilen von Werkzeugmaschinen, dessen aus einer Decke und mindestens einem seitlichen Schenkel bestehender, in axialer Richtung ausziehbarer Balgkörper quer zur Auszugsrichtung verlaufende, abwechselnd nach innen und außen weisende Falten aufweist, wobei in wenigstens einigen nach außen weisenden Falten zumindest in den Eckbereichen des Balgkörpers Stützelemente vorgesehen sind.

Faltenbälge, wie sie insbesondere zum Schutz von Teilen von Werkzeugmaschinen dienen, sind zur Versteifung und zur Erzielung einer guten Formstabilität im allgemeinen mit Stützrahmen versehen, die von innen her in die nach außen weisenden Falten eingeführt sind. Die Form dieser Stützrahmen ist dabei dem Profil der Führungsbahn angepaßt, an der die Stützrahmen im Betrieb anliegen. Bei Faltenbälgen, deren nach der Unterseite hin offener Balgkörper aus einer Decke und zwei seitlichen Schenkeln besteht, besitzen die Stützrahmen im allgemeinen eine U-förmige Gestalt. In den Eckbereichen des Faltenbalges liegen - bedingt durch die Faltung des Balgkörpers - mehrere Materialschichten des Balgkörpers übereinander. Hinzu kommt die Materialstärke des Stützelementes. Das Zusammendrückmaß des Faltenbalges (d.h. die minimale axiale Länge, auf die sich der Faltenbalg zusammendrucken läßt) wird daher durch die Anzahl der Materialschichten in den Eckbereichen des Faltenbalges begrenzt.

Durch die DE-A-32 40 988 ist bereits ein Faltenbalg der eingangs genannten Art bekannt, dessen Decke aus einem inneren und einem äußeren Deckenelement besteht, wobei zwischen einzelnen Falten Abstützelemente angeordnet sind. Um hierbei ein möglichst geringes Zusammendrückmaß des Faltenbalges zu erzielen, sind in den Eckbereichen des Faltenbalges Materialzonen des inneren Deckenelementes ausgeschnitten.

Der Erfindung liegt die Aufgabe zugrunde, einen Faltenbalg entsprechend dem Oberbegriff des Anspruches 1 so auszubilden, daß das Zusammendrückmaß des Faltenbalges wesentlich verringert wird.

Diese Aufgabe wird erfindungsgemäß dadurch gelöst, daß die Stützelemente in dem Eckbereich des Faltenbalges mindestens in der Zone mit einer Aussparung versehen sind, in der sich das die Falten bildende Material des Balgkörpers überlappt.

Zweckmäßige Ausgestaltungen der Erfindung sind Gegenstand der Unteransprüche.

Einige Ausführungsbeispiele der Erfindung sind in der Zeichnung veranschaulicht. Es zeigen

Fig. 1 einen Ausschnitt des Materiales des Balgkörpers vor dem Falten,

Fig. 2 eine Stirnansicht des aus dem Balgkörper gemäß Fig. 1 hergestellten Faltenbalges (ohne Stützelemente),

Fig. 3 eine Ansicht eines für den Faltenbalg gemäß Fig. 2 vorgesehenen Stützelementes,

Fig. 4 ein Stützelement gemäß Fig. 3 (zur Einfügung in einen etwas modifizierten Faltenbalg),

Fig. 5 ein weiteres Ausführungsbeispiel eines Stützelementes.

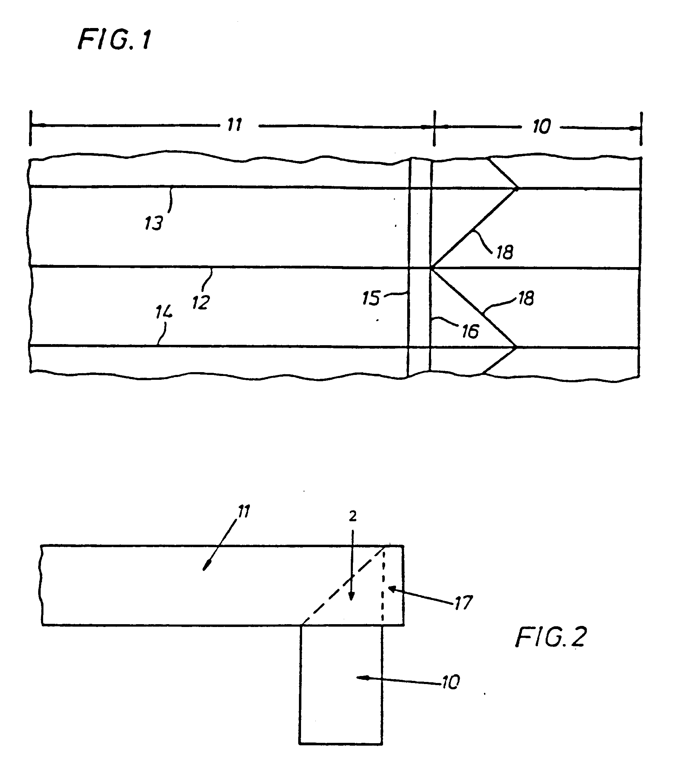

Anhand der Fig. 1 und 2 sei zunächst ein Ausführungsbeispiel eines Balgkörpers erläutert, wie er für den erfindungsgemäßen Faltenbalg Verwendung finden kann.

Fig. 1 veranschaulicht in einem Teilausschnitt das in eine Ebene ausgebreitete Balgmaterial, und zwar im Bereich eines Schenkels 10 und eines Teiles der Decke 11. Die Linie 12 markiert die Lage einer nach innen weisenden Falte des Faltenbalges und die Linien 13, 14 die Lage der benachbarten, nach außen weisenden Falten.

Faltlinien 15, 16 ergeben im eingeschwenkten Zustand des Schenkels (Fig. 2) einen gewissen seitlichen Überstand 17 der Decke 11 über den Schenkel 10. Faltlinien 18 ermöglichen das Einschwenken des Schenkels 10 gegenüber der Decke 11.

Der Faltenbalg, dessen in axialer Richtung ausziehbarer Balgkörper quer zur Auszugsrichtung (längs der Linien 12, 13, 14) verlaufende, abwechselnd nach innen und außen weisenden Falten aufweist, ist im Bereich zumindest einiger nach außen weisender Falten mit Stützelementen versehen.

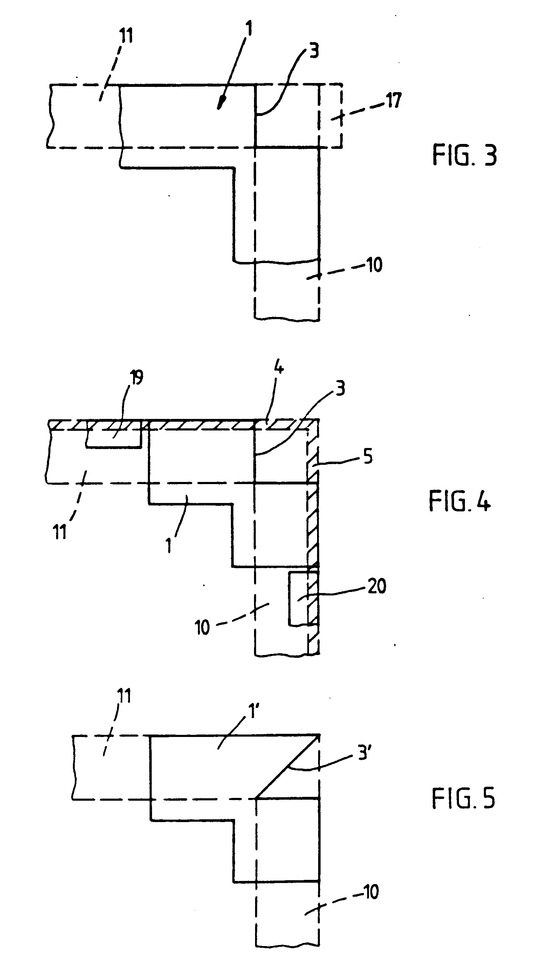

Fig. 3 veranschaulicht ein (mit durchgezogenen Linien dargestelltes) derartiges Stützelement. Der Balgkörper des Faltenbalges ist in Fig. 3 lediglich gestrichelt angedeutet.

Das Stützelement 1 ist bei dem in Fig. 3 dargestellten Ausführungsbeispiel ein U-förmiger Rahmen, der in den von der Decke 11 und den angrenzenden Schenkeln 10 gebildeten Eckbereichen des Faltenbalges, und zwar in der Zone, in der sich das die Falten bildenden Material des Balgkörpers überlappt (das ist in Fig. 2 die mit dem Bezugszeichen 2 gekennzeichnete dreieckförmige Zone) mit einer Aussparung 3 versehen ist, die beim Ausführungsbeispiel gemäß Fig. 3 rechteckförmig ist.

Durch diese Aussparung 3 wird erreicht, daß sich im Eckbereich des Balgkörpers trotz der hier unvermeidlichen Überlappung von Material der Decke 11 und des angrenzenden Schenkels 10 keine vergrößerte Materialstärke (im Vergleich zum übrigen Bereich des Faltenbalges) ergibt. Auf diese Weise wird durch die Eckbereiche des Faltenbalges das Zusammendrückmaß des Faltenbalges (d. h. die minimale Abmessung in axialer Richtung im zusammengedrückten Zustand) nicht vergrößert.

Das Stützelement 1 steht - wie Fig. 3 zeigt - nach unten bzw. innen über die Falten der Decke 11 bzw. des Schenkels 10 vor und bildet zugleich einen Gleiter, durch den der Faltenbalg auf einem Führungsprofil des abzudeckenden Teiles einer Werkzeugmaschine geführt ist.

Der Balgkörper besteht zweckmäßig aus wenigstens einer äußeren Deckschicht und einer inneren Absteifungsschicht, die an den Faltlinien vorzugsweise mit einer Perforation versehen ist. Diese beiden Schichten werden zumindest im Eckbereich der Kanten der nach außen weisenden Falten, vorzugsweise jedoch im Bereich der gesamten Kanten der nach außen weisenden Falten, fest miteinander verbunden.

Diese Verbindung der Schichten des Balgkörpers an den Faltenkanten kann durch Verschweißen erfolgen oder mittels einer Klemmleiste von U-förmigem Querschnittsprofil.

Im Rahmen der Erfindung ist es auch möglich, nur in den Eckbereichen des Faltenbalges mit einer Aussparung 3 versehene, als Eckteile ausgebildete Stützelemente 1 vorzusehen, wie dies in Fig. 4 veranschaulicht ist. Im Anschluß an diese Stützelemente 1 können in den Falten von Decke 11 und Schenkel 10 Aussteifungen 19, 20 vorgesehen sein, die sich über die gesamte Breite der Decke 11 bzw. die gesamte Höhe des Schenkels 10 erstrecken.

In Fig. 4 ist die Verbindung der Schichten des Balgkörpers im Bereich der Kanten der nach außen weisenden Falten mittels der Bezugszeichen 4 und 5 gekennzeichnet. Durch diese Verbindung werden zugleich das Stützelement 1 und die Aussteifungen 19, 20 in den Falten festgelegt.

Während der in den Fig. 1 bis 3 veranschaulichte Faltenbalg einen Überstand 17 der Decke 11 gegenüber den etwas zurückgesetzten Schenkeln 10 aufweist, ist beim Ausführungsbeispiel gemäß Fig. 4 angenommen, daß die Decke 11 bündig mit den Schenkeln 10 abschließt.

Fig. 5 veranschaulicht eine Variante, bei der das Stützelement $1'$ mit einer dreieckförmigen Aussparung $3'$ versehen ist, die genau der Zone 2 entspricht, in der sich das Material von Decke 11 und Schenkel 10 im Eckbereich überlappen.

Die Fig. 1 bis 5 zeigen Ausführungsbeispiele von Faltenbälgen, deren Balgkörper nach der Unterseite hin offen ist und somit aus einer Decke und zwei seitlichen Schenkeln besteht. Die Erfindung ist jedoch auch bei Faltenbälgen anwendbar, deren Balgkörper einen geschlossenen, polygonalen Querschnitt aufweist. Die Stützelemente werden hierbei zumindest in einzelnen, vorzugsweise jedoch in allen Eckbereichen des polygonalen Querschnitts angeordnet.

Durch die Klemm- oder Schweißverbindung an den Kanten der nach außen weisenden Falten (Bezugszeichen 4 und 5 gemäß Fig. 4) ergibt sich eine beim Auszug des Faltenbalges entgegenwirkende innere Spannung, die die Stabilität und den Selbsttrageeffekt des Faltenbalges verbessert. Auf diese Weise ist es möglich, Stützelemente nur in einzelnen Falten vorzusehen.

Im Rahmen der Erfindung ist es auch möglich, eine solche Schweiß- oder Klemmverbindung auch im Bereich der Kanten der nach innen weisenden Falten vorzusehen, wenn die einem Auszug entgegenwirkende innere Spannung der Falten noch weiter vergrößert werden soll.

Werden die Schichten des Balgkörpers an den Faltenkanten sowie die in den nach außen weisenden Falten angeordneten Stützelemente 1 sowie die evtl. zusätzlich angeordneten Aussteifungen 19, 20 mittels einer Klemmleiste von U-förmigem Querschnittsprofil miteinander verbunden, so kann man diese Klemmleiste durch Ausdrückungen im Balgmaterial wirkungsvoll verankern. Bei größeren Faltungen ist es auch möglich, derartige Klemmleisten an den Kanten der nach innen weisenden Falten vorzusehen. Diese Klemmleisten können sich dabei entweder nur über einen Teilbereich der Faltenlänge (beispielsweise über die Verbindungszone zwischen dem Stützelement 1 und den beiden angrenzenden Aussteifungen 19, 20 gemäß Fig. 4) oder über die gesamte Faltenlänge erstrecken.

## Patentansprüche

1. Faltenbalg zum Schutz von Teilen von Werkzeugmaschinen, dessen aus einer Decke (11) und mindestens einem seitlichen Schenkel (10) bestehender, in axialer Richtung ausziehbarer Balgkörper quer zur Auszugsrichtung verlaufende, abwechselnd nach innen und außen weisende Falten aufweist, wobei in wenigstens einigen nach außen weisenden Falten zumindest in den Eckbereichen des Balgkörpers Stützelemente (1, 1') vorgesehen sind, dadurch gekennzeichnet, daß die Stützelemente in dem Eckbereich des Faltenbalges mindestens in der Zone (2) mit einer Aussparung (3, 3') versehen sind, in der sich das die Falten bildende Material des Balgkörpers überlappt.

2. Faltenbalg nach Anspruch 1, dadurch gekennzeichnet, daß die Stützelemente (1, $1'$) als Eckteile ausgebildet sind und sich lediglich über einen Eckbereich des Faltenbalges erstrecken.

3. Faltenbalg nach Anspruch 1, dadurch gekennzeichnet, daß die Stützelemente (1, $1'$) zugleich als Gleiter ausgebildet sind.

**4.** Faltenbalg nach Anspruch 1, dessen nach der Unterseite hin offener Balgkörper aus einer Decke 11 und zwei seitlichen Schenkeln (10) besteht, dadurch gekennzeichnet, daß die Stützelemente (1, 1′) jeweils in den von der Decke und den beiden angrenzenden Schenkeln gebildeten Eckbereichen vorgesehen sind.

**5.** Faltenbalg nach Anspruch 4, dadurch gekennzeichnet, daß die Stützelemente (1) mit einer rechteckförmigen Aussparung versehen sind.

**6.** Faltenbalg nach Anspruch 4, dadurch gekennzeichnet, daß die Stützelemente (1′) mit einer dreieckförmigen Aussparung versehen sind.

**7.** Faltenbalg nach Anspruch 1, dessen Balgkörper einen geschlossenen, polygonalen Querschnitt aufweist, dadurch gekennzeichnet, daß Stützelemente zumindest in einzelnen, vorzugsweise in allen Eckbereichen des polygonalen Querschnitts vorgesehen sind.

**8.** Faltenbalg nach Anspruch 1, dadurch gekennzeichnet, daß der Balgkörper aus wenigstens einer äußeren Deckschicht und einer an den Faltlinien vorzugsweise mit einer Perforation versehenen inneren Absteifungsschicht besteht, wobei diese beiden Schichten zumindest im Eckbereich der Kanten der nach außen weisenden Falten fest miteinander verbunden sind.

**9.** Faltenbalg nach Anspruch 8, dadurch gekennzeichnet, daß die Schichten des Balgkörpers an den Faltenkanten durch Verschweißen miteinander verbunden sind.

**10.** Faltenbalg nach Anspruch 8, dadurch gekennzeichnet, daß die Schichten des Balgkörpers an den Faltenkanten durch eine Klemmleiste mit U-förmigem Querschnittsprofil miteinander verbunden sind.

**11.** Faltenbalg nach Anspruch 1, dadurch gekennzeichnet, daß im Anschluß an die als Eckteile ausgebildeten, mit einer Aussparung (3, 3′) versehenen Stützelemente (1, 1′) zusätzliche Aussteifungen (19, 20) in wenigstens einigen nach außen weisenden Falten vorgesehen sind.

## Claims

**1.** Bellows for the protection of parts of machine tools, in which the bellows body which consists of a cover (11) and at least one side arm (10) and can be extended in the axial direction has folds which extend obliquely with respect to the direction of extension and point alternately inwards and outwards, support elements (1, 1') being provided in at least some of the outwardly-pointing folds at least in the corner regions of the bellows body, characterised in that the support elements in the corner region of the bellows are provided at least in the zone (2) with a cut-out (3) in which the material of the bellows which forms the folds overlaps.

**2.** Bellows as claimed in claim 1, characterised in that the support elements (1, 1') are constructed as corner parts and merely extend over the corner region of the bellows.

**3.** Bellows as claimed in claim 1, characterised in that the support elements (1, 1') are simultaneously constructed as slides.

**4.** Bellows as claimed in claim 1, in which the bellows body is open towards the underside and consists of a cover (11) and two side arms (10), characterised in that the support elements (1, 1') are provided in each case in the corner regions formed by the cover and the two adjoining arms.

**5.** Bellows as claimed in claim 4, characterised in that the support elements (1') are provided with a rectangular cut-out.

**6.** Bellows as claimed in claim 4, characterised in that the support elements (1') are provided with a triangular cut-out.

**7.** Bellows as claimed in claim 1, the bellows body of which has a closed polygonal cross-section, characterised in that support elements are provided at least in individual corner regions, but preferably in all corner regions of the polygonal cross-section.

**8.** Bellows as claimed in claim 1, characterised in that the bellows body consists of at least one outer cover layer and an inner reinforcing layer which is preferably provided with a perforation on the fold lines, these two layers being firmly connected to one another at least in the corner region of the edges of the folds which point outwards.

**9.** Bellows as claimed in claim 8, characterised in that the layers of the bellows are connected to one another on the fold edges by welding.

**10.** Bellows as claimed in claim 8, characterised in that the layers of the bellows body are connected to one another on the fold edges by a clamping strip with a U-shaped cross-sectional profile.

11. Bellows as claimed in claim 1, characterised in that in connection with the support elements (1, 1') which are constructed as corner parts and are provided with a cut-out (3, 3'), additional reinforcements (19, 20) are provided in at least some folds which point outwards.

**Revendications**

1. Soufflet de protection de pièces de machines-outil, dont le corps extensible axialement et se composant d'une couverture (11) et d'au moins une aile latérale (10) comporte des plis orientés perpendiculairement à la direction d'extension et tournés en alternance vers l'intérieur et vers l'extérieur, des éléments de support (1, 1') étant prévus dans au moins certains des plis tournés vers l'extérieur au moins aux angles du corps du soufflet, caractérisé en ce que les éléments de support situés dans les angles du soufflet comportent au moins un évidement (3, 3') dans la zone (2) dans laquelle la matière du corps du soufflet qui forme les plis se chevauche.

2. Soufflet selon la revendication 1, caractérisé en ce que les éléments de soutien (1, 1') ont la forme de pièces en équerre et ne sont disposés que sur une région d'angle du soufflet.

3. Soufflet selon la revendication 1, caractérisé en ce que les éléments de soutien (1, 1') sont également conformés en patins.

4. Soufflet selon la revendication 1, dont le corps ouvert vers le côté intérieur se compose d'une couverture (11) et de deux ailes latérales (10), caractérisé en ce que les éléments de soutien (1, 1') sont prévus à chacun des angles formés par la couverture et les deux ailes voisines.

5. Soufflet selon la revendication 4, caractérisé en ce que les éléments de soutien (1) comportent un évidement rectangulaire.

6. Soufflet selon la revendication 4, caractérisé en ce que les éléments de soutien (1) comportent un évidement triangulaire.

7. Soufflet selon la revendication 1, dont le corps présente un profil polygonal fermé, caractérisé en ce que des éléments de soutien sont prévus au moins dans certains, de préférence dans tous les angles du profil polygonal.

8. Soufflet selon la revendication 1, caractérisé en ce que son corps se compose d'au moins une couche extérieure de couverture et d'une couche intérieure de rigidification comportant sur les lignes de pliage de préférence une perforation, ces deux couches étant fixées l'une à l'autre au moins dans les angles des bords des plis tournés vers l'extérieur.

9. Soufflet selon la revendication 8, caractérisé en ce que les couches de son corps sont fixées l'une à l'autre par soudage sur les bords des plis.

10. Soufflet selon la revendication 8, caractérisé en ce que les couches de son corps sont reliées l'une à l'autre sur les bords des plis par une baguette de serrage ayant un profil transversal en étrier.

11. Soufflet selon la revendication 1, caractérisé en ce que des rigidifications supplémentaires (19, 20) sont prévues dans au moins certains des plis tournés vers l'extérieur dans le prolongement des éléments de soutien (1, 1') ayant la forme de pièces en cornière et comportant un évidement (3, 3').

## FIG.1

## FIG.2

FIG. 3

FIG. 4

FIG. 5